# EUROPÄISCHE PATENTSCHRIFT

(11) **EP 2 457 023 B1**
(45) Veröffentlichungstag und Bekanntmachung des Hinweises auf die Patenterteilung: **07.09.2016**
(21) Anmeldenummer: 10731536.8
(22) Anmeldetag: 15.07.2010
(51) Int. Cl.: F23N 1/00

(54) **GASVENTILEINHEIT FÜR EINEN GASBRENNER**
GAS VALVE UNIT FOR A GAS BURNER
UNITÉ DE VANNES À GAZ POUR UN BRÛLEUR À GAZ

(30) Priorität: 24.07.2009 EP 09290590; 08.03.2010 EP 10290113
(43) Veröffentlichungstag der Anmeldung: 30.05.2012
(73) Patentinhaber: BSH Hausgeräte GmbH, 81739 München (DE)
(72) Erfinder: NAUMANN, Jörn, 77770 Durbach (DE); CADEAU, Christophe, 67100 Strasbourg (FR); CLAUSS, Stéphane, F-67140 Stotzheim (FR); EISENBERG, Alexander, F-67150 Erstein (FR)
(86) Internationale Anmeldenummer: PCT/EP2010/060176
(87) Internationale Veröffentlichungsnummer: WO 2011/009793

(56) Entgegenhaltungen:
- EP-A2- 1 640 664
- DE-A1- 10 249 938
- DE-T2- 3 874 296

## Beschreibung

Die Erfindung betrifft eine Gasventileinheit zum Einstellen eines einem Gasbrenner eines Gasgeräts, insbesondere eines Gaskochgeräts, zugeführten Gasvolumenstroms, wobei die Gasventileinheit mindestens zwei Auf-Zu-Ventile aufweist.

Gasventileinheiten der genannten Art sind beispielsweise in den Druckschriften EP0818655A2 und WO2004063629A1 beschrieben. Mit derartigen Gasventileinheiten kann der einem Gasbrenner eines Gaskochgeräts zugeführte Gasvolumenstrom in mehreren Stufen gesteuert werden. Dabei besitzt der Gasvolumenstrom in jeder Stufe eine reproduzierbare Größe. Der Durchflussquerschnitt der Gasventileinheit insgesamt - und damit die Größe des Gasvolumenstroms - wird eingestellt, indem bestimmte Auf-Zu-Ventile der Gasventileinheit geöffnet bzw. geschlossen werden und dadurch der Gasfluss durch bestimmte Drosselöffnungen freigegeben bzw. unterbrochen wird.

Bei den bekannten gattungsgemäßen Gasventileinheiten werden die Auf-Zu-Ventile einzeln elektromagnetisch betätigt. Hierzu ist jedem der Auf-Zu-Ventile ein eigener Elektromagnet zugeordnet, der das Auf-Zu-Ventil öffnet bzw. schließt. Die Ansteuerung der Elektromagnete erfolgt mittels einer elektronischen Steuereinheit. Diese elektronische Steuereinheit verarbeitet die von einer Bedienperson des Gaskochgerätes mittels eines elektrischen Bedienelements erzeugten Signale und steuert die Elektromagnete der Auf-Zu-Ventile entsprechend an.

Das Dokument DE 102 49 938 A1 zeigt eine Ventilanordnung mit wenigstens einem Ventil, das wenigstens eine Öffnung aufweist, die mit einer Kugel verschliessbar ist. Dabei ist im Bereich eines jeden Ventils wenigstens ein Permanentmagnet positionierbar, der die innerhalb des Ventils angeordnete Kugel gegen die verschliessbare Öffnung presst oder in einem vorgebbaren Abstand davon hält.

Das Dokument EP 1 640 664 A2 beschreibt eine Steuerventilanordnung. Die Steuerventilanordnung umfasst einen Einlaß zum Empfangen eines Gasstroms, einen Auslass zum Bereitstellen des Gasstroms mit einem Gasbrenner, ein Absperrventil zum Unterbrechen des Gasstroms aus dem Einlaß, und ein mikroelektromechanisches Systems(MEMS)-Ventil, welches in Reihe mit dem Absperrventil zwischen dem Einlass und dem Auslass zum Regulieren der Gasströmung vom Einlaß mit dem Ausgang gekoppelt ist.

Der vorliegenden Erfindung liegt die Aufgabe zugrunde, eine einfacher gestaltete Gasventileinheit der eingangs genannten Art zur Verfügung zu stellen.

Diese Aufgabe wird erfindungsgemäß durch eine Gasventileinheit mit den Merkmalen des Anspruchs 1 gelöst. Dabei sind die Auf-Zu-Ventile durch Bewegen mindestens eines magnetisch wirksamen Körpers, insbesondere eines Permanentmagnets, relativ zu den Auf-Zu-Ventilen betätigbar.

Jedes Auf-Zu-Ventil weist einen bewegbaren Absperrkörper auf, der bei geschlossenem Auf-Zu-Ventil an einem Ventilsitz anliegt und dadurch eine Öffnung im Ventilsitz verschließt. Bei geöffnetem Auf-Zu-Ventil wird die Öffnung im Ventilsitz von Gas durchströmt. Dieser Gasfluss wird unterbrochen, wenn der Absperrkörper des jeweiligen Auf-Zu-Ventils an dem Ventilsitz anliegt.

Die Absperrkörper der einzelnen Auf-Zu-Ventile sind auf einer Kreisbahn um eine Achse der Gasventileinheit angeordnet und die Absperrkörper sind parallel zu dieser Achse bewegbar. Es entsteht hierdurch eine ringförmige Anordnung, bei der auch die Öffnungen in der Ventildichtplatte auf einer Kreisbahn angeordnet sind. Die Bewegung der Absperrkörper erfolgt senkrecht zu der Ebene der Ventildichtplatte.

Dabei ist vorgesehen, dass der mindestens eine vorzugsweise von einem Permanentmagnet gebildete magnetisch wirksame Körper an einem um die Achse der Gasventileinheit drehbaren Bauteil der Gasventileinheit angeordnet ist, wobei die Achse vorzugsweise von einer Schaltwelle der Gasventileinheit gebildet ist und wobei das drehbare Bauteil beispielsweise von einem Mitnehmer gebildet ist. Durch Drehen des drehbaren Bauteils wird der Permanentmagnet auf einer Kreisbahn bewegt. Der Durchmesser dieser Kreisbahn entspricht im Wesentlichen dem Durchmesser der Kreisbahn, in der sich die Absperrkörper befinden. Dies bedeutet, dass bei einem Drehen des drehbaren Bauteils der Permanentmagnet über die Absperrkörper hinweg bewegt wird.

In der bevorzugten Ausführungsform ist der magnetisch wirksame Körper von einem Permanentmagnet gebildet, der relativ zu den Auf-Zu-Ventilen bewegbar ist. Gemäß einer anderen Ausführungsform ist es ebenfalls möglich, als magnetisch wirksamen Körper einen selbst nicht magnetischen Körper aus ferromagnetischem Material vorzusehen. Permanentmagnete sind dann im Bereich der Auf-Zu-Ventile vorgesehen, deren magnetische Anziehungskraft dann - abhängig von der Position des magnetisch wirksamen Körpers - zwischen dem magnetisch wirksamen Körper und dem jeweiligen Permanentmagnet wirkt.

Die Betätigung der Gasventileinheit erfolgt, indem die Lage oder die räumliche Ausrichtung eines magnetisch wirksamen Körpers, insbesondere eines Permanentmagnets, relativ zu dem zu betätigenden Auf-Zu-Ventil verändert wird. Im Folgenden steht der Begriff "Permanentmagnet" stellvertretend auch für andere magnetisch wirksame Körper. Wenn die Bewegung des Permanentmagnets durch eine Bedienperson von Hand erfolgt, sind zum Schalten der Auf-Zu-Ventile keine elektrischen Komponenten erforderlich. Alternativ kann der Permanentmagnet auch mittels eines beliebigen Stellglieds, beispielsweise eines Elektromotors, bewegt werden. Der Elektromotor wird dabei von einer elektronischen Steuereinheit angesteuert. Dies ermöglicht es, dieselbe Gasventileinheit wahlweise mechanisch durch die Bedienperson, oder mittels eines elektrischen Stellglieds zu betätigen. Bei der Herstellung von Kochgeräten können baugleiche Gasventileinheiten sowohl mit mechanischen Benutzerschnittstellen, beispielsweise Drehknebeln, als auch mit elektrischen Benutzerschnittstellen, beispielsweise Touch-Sensoren, kombiniert werden.

Bevorzugt ist der Ventilsitz als im Wesentlichen ebene Fläche ausgeführt. Die ebene Fläche des Ventilsitzes bildet die Dichtfläche gegenüber dem Absperrkörper. Zur Herstellung des Ventilsitzes an sich sind damit keine mechanischen Bearbeitungsschritte erforderlich, wenn zur Herstellung des Ventilsitzes ein Plattenmaterial verwendet wird. In die ebene Fläche müssen dann nur die Öffnungen eingearbeitet werden. Alternativ kann der Ventilsitz als Formdichtung ausgebildet sein, wobei der Absperrkörper dann an seiner Dichtfläche plan ausgebildet ist. Der Vorteil dieser Variante ist, dass die Gefahr einer Beschädigung der Dichtkante am Absperrkörper verringert ist.

Mit besonderem Vorteil sind die Ventilsitze der mindestens zwei Auf-Zu-Ventile von einem gemeinsamen Bauteil gebildet. Dieses gemeinsame Bauteil kann als Ventildichtplatte ausgeführt sein und besitzt für jedes Auf-Zu-Ventil eine Öffnung und einen der Öffnung zugeordneten Ventilsitz. Gemäß einer zweckmäßigen Ausgestaltung der Erfindung weist jedes Auf-Zu-Ventil eine Feder auf, die bei geschlossenem Auf-Zu-Ventil den Absperrkörper auf den Ventilsitz drückt. Die Feder erzeugt somit die Schließkraft des Auf-Zu-Ventils. Sie stellt sicher, dass unabhängig von der Einbaulage der Gasventileinheit, z.B. auch dann, wenn eine Gewichtskraft des Absperrkörpers der Kraft der Feder entgegen wirkt, das Auf-Zu-Ventile sicher schließt.

Zum Öffnen des Auf-Zu-Ventils ist der Absperrkörper mittels der Kraft des Permanentmagnets entgegen der Kraft der Feder von dem Ventilsitz abhebbar. Jedes Auf-Zu-Ventil kann somit mittels des Permanentmagnets aktiv geöffnet werden. Der Absperrkörper ist aus einem ferromagnetischen Material ausgebildet und wird zum Öffnen des Auf-Zu-Ventils von dem Permanentmagnet angezogen. Wenn der Permanentmagnet von dem Absperrkörper weg bewegt wird, oder wenn der Permanentmagnet vollständig von der Gasventileinheit entfernt wird, schließt jedes einzelne Auf-Zu-Ventil infolge der Kraft der Feder, die den Absperrkörper auf den Ventilsitz drückt, automatisch.

Ebenfalls möglich ist es, den Absperrkörper des Auf-Zu-Ventils als Permanentmagnet auszuführen. Die Betätigung kann dann dadurch erfolgen, dass ein nicht-magnetischer ferromagnetischer Körper relativ zum Absperrkörper bewegt wird. Alternativ können auch sowohl der Absperrkörper als auch der relativ zu dem Absperrkörper bewegbare Körper als Permanentmagnet ausgeführt sein. In diesem Fall kann wahlweise die Anziehungskraft oder die Abstoßkraft der Permanentmagnete zur Betätigung der Auf-Zu-Ventile genutzt werden.

Bevorzugt ist jeder Absperrkörper von einem im Wesentlichen zylindrischen Stößel gebildet. Der Absperrkörper weist an seinem dem Ventilsitz zugewandten Ende eine ringförmige Dichtkante auf.

Jeder Absperrkörper ist in einem Ventilkörper der Gasventileinheit axial bewegbar geführt. Andere Bewegungsrichtungen des Absperrkörpers sind nicht vorgesehen.

Vorteilhafterweise weist die Gasventileinheit mehrere, vorzugsweise mindestens vier Auf-Zu-Ventile auf. Die Anzahl der Auf-Zu-Ventile beeinflusst die Anzahl der möglichen Schaltstufen der Gasventileinheit.

Zur Betätigung des Auf-Zu-Ventils ist die Position des vorzugsweise als Permanentmagnet ausgeführten magnetisch wirksamen Körpers relativ zu dem Absperrkörper des Auf-Zu-Ventils veränderbar. Der Absperrkörper wird von dem Permanentmagnet angezogen, wenn sich der Absperrkörper direkt oberhalb des Permanentmagnets befindet. Bei allen übrigen Positionen des Permanentmagnets ist das Auf-Zu-Ventil mittels der auf den Absperrkörper wirkenden Kraft der Feder geschlossen.

Mit besonderem Vorteil sind der mindestens eine vorzugsweise von einem Permanentmagnet ausgeführte magnetisch wirksame Körper und die Auf-Zu-Ventile derart ausgeführt, dass -in Abhängigkeit von der Position des magnetisch wirksamen Körpers- entweder kein Auf-Zu-Ventil oder genau ein Auf-Zu-Ventil oder genau zwei nebeneinander angeordnete Auf-Zu-Ventile geöffnet sind. Die Größe des Permanentmagnets und die möglichen Positionen des Permanentmagnets sind derart ausgelegt, dass der Permanentmagnet höchstens zwei Auf-Zu-Ventile gleichzeitig öffnen kann. Dies ist dann der Fall, wenn sich der Permanentmagnet im Wesentlichen zwischen den gedachten Verlängerungen zweier Absperrkörper befindet. Genau ein Auf-Zu-Ventil ist geöffnet, wenn sich der Permanentmagnet im Wesentlichen exakt auf der gedachten Verlängerung eines Absperrkörpers befindet. Kein Auf-Zu-Ventil ist geöffnet, wenn der Permanentmagnet von jedem der Absperrkörper derart weit -entfernt ist, dass die Magnetkraft nicht ausreicht, um den Absperrkörper entgegen der Kraft der Feder von dem Ventilsitz abzuheben.

Eine besonders einfache Anordnung sieht vor, dass das drehbare Bauteil durch eine Bedienperson von Hand um die Achse drehbar ist. Hiefür sind keinerlei elektrische oder elektronische Bauteile erforderlich. Die Betätigung der Gasventileinheit erfolgt ausschließlich durch die manuelle Kraft der Bedienperson, die den Permanentmagnet relativ zu den Absperrkörpern der Auf-Zu-Ventile bewegt.

Ebenfalls ist es möglich, dass das drehbare Bauteil mittels eines elektrischen Stellglieds um die Achse drehbar ist. Als elektrisches Stellglied kommt insbesondere ein Elektromotor, beispielsweise ein Schrittmotor in Betracht. Das Stellglied wird dabei von einer elektronischen Steuereinheit angesteuert, beispielsweise in Abhängigkeit von den Signalen einer elektrischen Benutzerschnittstelle, oder in Abhängigkeit von automatisierten Funktionen, beispielsweise einer automatischen Leistungsregulierung oder einer Abschaltautomatik.

Weitere Vorteile und Einzelheiten der Erfindung werden anhand der in den schematischen Figuren dargestellten Ausführungsbeispiele näher erläutert. Dabei zeigt
- Figur 1: eine schematische Schaltanordnung der Gasventileinheit mit einem ersten geöffneten Auf-Zu-Ventil,
- Figur 2: die schematische Schaltanordnung mit zwei geöffneten Auf-Zu-Ventilen,
- Figur 3: die schematische Schaltanordnung mit dem letzten geöffneten Auf-Zu-Ventil,
- Figur 4: den schematischen Aufbau der Gasventilanordnung mit geschlossenen Auf-Zu-Ventilen,
- Figur 5: den schematischen Aufbau mit einem geöffneten Auf-Zu-Ventil,
- Figur 6: den schematischen Aufbau mit den ersten beiden geöffneten Auf-Zu-Ventilen,
- Figur 7: den schematischen Aufbau mit dem geöffneten Auf-Zu-Ventil,
- Figur 8: den schematischen Aufbau mit dem letzten geöffneten Auf-Zu-Ventil,
- Figur 9: den schematischen Aufbau einer Variante der Gasventileinheit,
- Figur 10: die Gasventileinheit in perspektivischer Ansicht schräg von oben,
- Figur 11: die perspektivische Ansicht mit Blick auf die Auf-Zu-Ventile,
- Figur 12: die Gasventileinheit in perspektivischer Ansicht schräg von unten.
- Figur 13: die perspektivische Ansicht mit Blick auf eine untere Gasverteilungsplatte,
- Figur 14: eine Explosionsdarstellung der Gasventileinheit, schräg von unten,
- Figur 15: eine Variante der Schaltanordnung gemäß Fig. 1-3 in vollständig geschlossenem Zustand,
- Figur 16: die Variante der Schaltanordnung in vollständig geöffnetem Zustand mit einem geöffneten Auf-Zu-Ventil,
- Figur 17: die Variante der Schaltanordnung in vollständig geöffnetem Zustand mit zwei geöffneten Auf-Zu-Ventilen,
- Figur 18: die Variante der Schaltanordnung in teilweise geöffnetem Zustand,
- Figur 19: die Variante der Schaltanordnung in minimal geöffnetem Zustand.

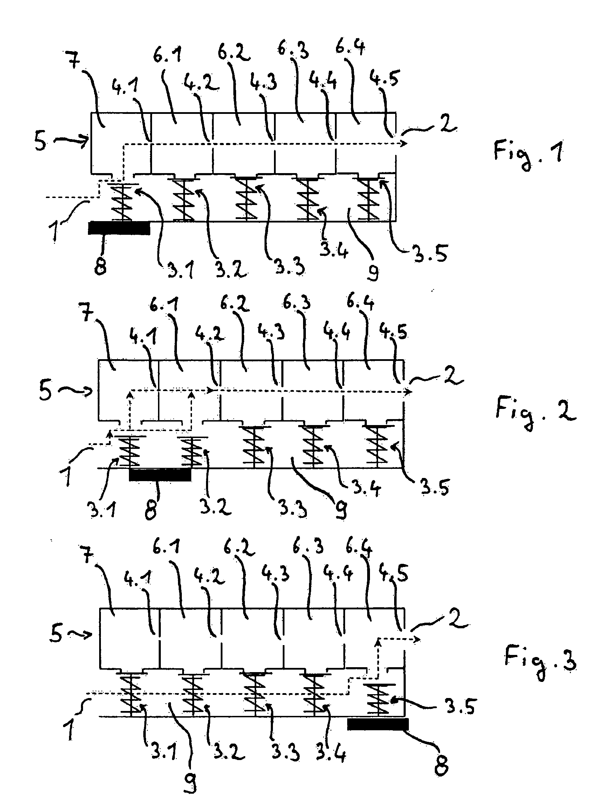

Figur 1 zeigt die Schaltanordnung der erfindungsgemäßen Gasventileinheit. Zu erkennen ist ein Gaseingang 1, mit dem die Gasventileinheit beispielsweise an eine Hauptgasleitung eines Gaskochgeräts angeschlossen ist. An dem Gaseingang 1 steht das zur Verbrennung vorgesehene Gas mit einem konstanten Druck, von beispielsweise 20 Millibar oder 50 Millibar an. An einen Gasausgang 2 der Gasventileinheit wird eine beispielsweise zu einem Gasbrenner des Gaskochgeräts führende Gasleitung angeschlossen. Der Gaseingang 1 ist über einen Gaseingangsraum 9 der Gasventileinheit mit der Eingangsseite der im vorliegenden Ausführungsbeispiel fünf Auf-Zu-Ventile 3 (3.1 bis 3.5) verbunden. Durch Öffnen der Auf-Zu-Ventile 3 ist der Gaseingang 1 jeweils mit einem bestimmten Abschnitt einer Drosselstrecke 5 verbunden, in den das Gas über das geöffnete Auf-Zu-Ventil 3 einströmt. Die Drosselstrecke 5 umfasst einen Eingangsabschnitt 7, in den das erste Auf-Zu-Ventil 3.1 mündet. Die weiteren Auf-Zu-Ventile 3.2 bis 3.5 münden jeweils in einen Verbindungsabschnitt 6 (6.1 bis 6.4) der Drosselstrecke 5. Der Übergang zwischen dem Eingangsabschnitt 7 und dem ersten Verbindungsabschnitt 6.1, sowie die Übergänge zwischen zwei benachbarten der Verbindungsabschnitte 6.1 bis 6.4 ist jeweils von einer Drosselstelle 4 (4.1 bis 4.5) gebildet. Die letzte Drosselstelle 4.5 verbindet den letzten Verbindungsabschnitt 6.4 mit dem Gasausgang 2. Die Drosselstellen 4.1 bis 4.5 besitzen eine der Reihe nach zunehmendem Öffnungsquerschnitt. Der Durchflussquerschnitt der letzten Drosselstelle 4.5 kann so groß gewählt sein, dass die letzte Drosselstelle 4.5 praktisch keine Drosselfunktion besitzt.

Die Betätigung der Auf-Zu-Ventile 3 erfolgt mittels eines Permanentmagnets 8, der entlang der Reihe der Auf-Zu-Ventile 3 verschiebbar ist. Die Kraft zum Öffnen des jeweiligen Auf-Zu-Ventils 3 wird dabei direkt von der Magnetkraft des Permanentmagnets 8 gebildet. Diese Magnetkraft öffnet das jeweilige Auf-Zu-Ventil 3 entgegen einer Federkraft.

In der Schaltstellung gemäß Figur 1 ist ausschließlich das erste Auf-Zu-Ventil 3.1 geöffnet. Durch dieses Auf-Zu-Ventil 3.1 strömt das Gas von dem Gaseingangsraum 9 in den Eingangsabschnitt 7 und passiert von dort aus auf dem Weg zum Gasausgang 2 sämtliche Drosselstellen 4 und sämtliche Verbindungsabschnitte 6. Die Menge des durch die Ventileinheit strömenden Gases gibt die Minimalleistung des an die Gasventileinheit angeschlossenen Gasbrenners vor.

Figur 2 zeigt die schematische Schaltanordnung, bei der der Permanentmagnet 8 derart nach in der Zeichnung rechts verschoben ist, dass sowohl das erste Auf-Zu-Ventil 3.1 als auch das zweite Auf-Zu-Ventil 3.2 geöffnet sind.

Durch das geöffnete zweite Auf-Zu-Ventil 3.2 strömt das Gas von dem Gaseingangsraum 9 direkt in den ersten Verbindungsabschnitt 6.1 und von dort über die Drosselstellen 4.2 bis 4.5 zum Gasausgang 2. Das zum Gasausgang 2 strömende Gas umgeht aufgrund des geöffneten Auf-Zu-Ventils 3.2 die erste Drosselstelle 4.1. Der Gasvolumenstrom in der Schaltstellung gemäß Figur 2 ist deshalb größer als der Gasvolumenstrom in der Schaltstellung gemäß Figur 1. Der Gaszufluss zu dem ersten Verbindungsabschnitt 6.1 erfolgt praktisch ausschließlich über das zweite Auf-Zu-Ventil 3.2. Aufgrund der offen stehenden Auf-Zu-Ventile 3.1 und 3.2 herrscht in dem Eingangsabschnitt 7 dasselbe Druckniveau wie in dem ersten Verbindungsabschnitt 6.1. Aus dem Eingangsabschnitt 7 strömt über die erste Drosselstelle 4.1 deshalb so gut wie kein Gas in den ersten Verbindungsabschnitt 6.1 nach. Der insgesamt durch die Gasventileinheit strömende Gasvolumenstrom ändert sich daher praktisch nicht, wenn der Permanentmagnet 8 weiter nach in der Zeichnung rechts bewegt wird und dadurch das erste Auf-Zu-Ventil 3.1 bei geöffnetem zweiten Auf-Zu-Ventil 3.2 geschlossen wird.

Durch Bewegen des Permanentmagnets 8 nach in der Zeichnung rechts werden die Auf-Zu-Ventile 3.3. bis 3.5 sukzessive geöffnet und dadurch der Gasvolumenstrom durch die Gasventileinheit schrittweise erhöht.

Figur 3 zeigt die schematische Schaltanordnung der Gasventileinheit in maximal geöffneter Stellung. Hierbei befindet sich der Permanentmagnet 8 in seiner Endstellung auf der in der Zeichnung rechten Seite. Das letzte Auf-Zu-Ventil 3.5 ist bei dieser Position des Permanentmagnets 8 geöffnet. Gas strömt hierbei direkt aus dem Gaseingangsraum 9 in den letzten Verbindungsabschnitt 6.4 und passiert auf dem Weg zum Gasausgang 2 ausschließlich die letzte Drosselstelle 4.5. Diese letzte Drosselstelle 4.5 kann einen derart großen Durchflussquerschnitt aufweisen, dass praktisch keine Drosselung des Gasstroms eintritt und das Gas die Gasventileinheit praktisch ungedrosselt durchströmen kann.

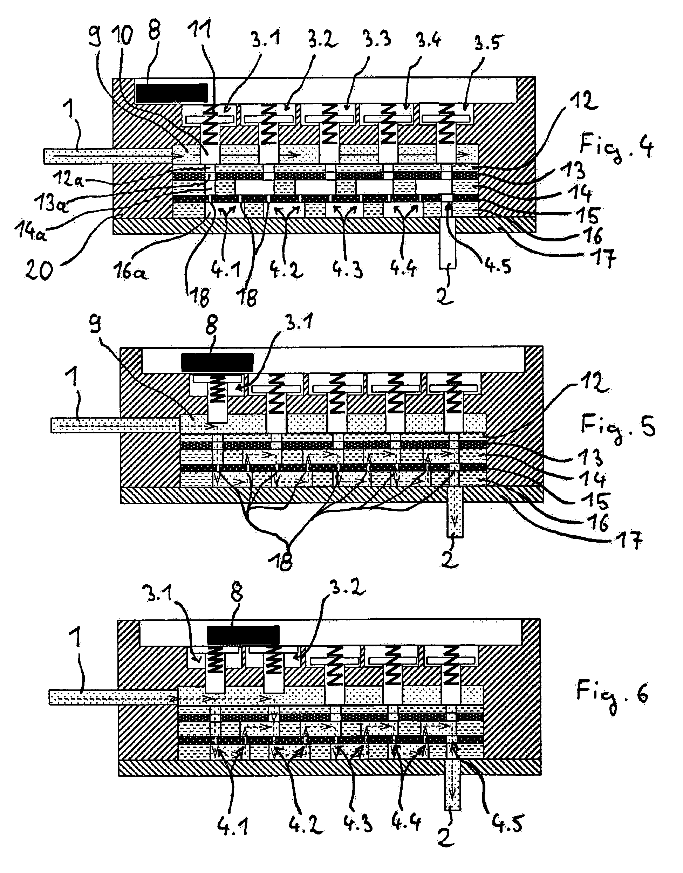

Die Figuren 4 bis 8 zeigen schematisch einen konstruktiven Aufbau einer Gasventileinheit mit einer Schaltanordnung gemäß Figur 1 bis 3. Zu erkennen ist ein Ventilkörper 20, in dem der Gaseingang 1 der Gasventileinheit ausgeführt ist. Im Inneren des Ventilkörpers 20 befindet sich ein mit dem Gaseingang 1 verbundener Gaseingangsraum 9. Absperrkörper 10 der Auf-Zu-Ventile 3 sind in dem Ventilkörper 20 geführt, derart, dass sie sich in der Zeichnung nach oben und unten bewegen können. Jeder Absperrkörper 10 ist mittels einer Feder 11 nach in der Zeichnung unten vorgespannt. Mittels der Kraft des Permanentmagnets 8 kann jeder Absperrkörper 10 entgegen der Kraft der Feder 11 nach in der Zeichnung oben bewegt werden. Die Federn 11 drücken die Absperrkörper auf eine Ventildichtplatte 12, so dass die Absperrkörper 10 in der Ventildichtplatte 12 vorhandene Öffnungen 12a gasdicht verschließen. Unterhalb der Ventildichtplatte 12 ist eine Druckplatte 13 angeordnet, mit Öffnungen 13a, die mit den Öffnungen 12a in der Ventildichtplatte 12 korrespondieren. Die Öffnungen 13a in der Druckplatte 13 münden in Öffnungen 14a in eine erste Gasverteilungsplatte 14. In der Zeichnung unterhalb der ersten Gasverteilungsplatte 14 befindet sich eine Drosselplatte 15 mit einer Vielzahl von Drosselöffnungen 18. Jede der Drosselstellen 4.1 bis 4.4 wird dabei von zwei Drosselöffnungen 18 gebildet. Die zwei zu einer Drosselstelle 4.1 bis 4.4 gehörenden Drosselöffnungen 18 sind jeweils mittels der Öffnungen 16a in einer zweiten Gasverteilungsplatte 16 miteinander verbunden. Die Öffnungen 14a in der ersten Gasverteilungsplatte verbinden hingegen die nebeneinander liegenden Drosselöffnungen 18 zweier benachbarter Drosselstellen 4.1 bis 4.5. Die letzte Drosselstelle 4.5 besteht aus nur einer Drosselöffnung 18, welche über eine korrespondierende Öffnung 16a in der zweiten Gasverteilungsplatte 16 in den Gasausgang 2 der Gasventileinheit mündet.

Bei der Schaltstellung gemäß Figur 4 befindet sich der Permanentmagnet 8 in einer Endposition, in der alle Auf-Zu-Ventile 3 geschlossen sind. Die Gasventileinheit ist damit insgesamt geschlossen. Der Gasvolumenstrom ist gleich null.

Figur 5 zeigt den schematischen Aufbau der Gasventileinheit bei geöffnetem erstem Auf-Zu-Ventil 3.1. Das Gas strömt vom Gaseingang 1 in den Gaseingangsraum 9 und von dort über die jeweils erste Öffnung der Ventildichtplatte 12, der Druckplatte 13 und der ersten Gasverteilungsplatte 14 zur Drosselplatte 15. Auf dem Weg zum Gasausgang 2 durchströmt das Gas alle Drosselöffnungen 18 der Drosselplatte 15 sowie alle Öffnungen 14a der ersten Gasverteilungsplatte 14 und alle Öffnungen 16a der zweiten Gasverteilungsplatte 16.

Figur 6 stellt den schematischen Aufbau mit geöffnetem erstem Auf-Zu-Ventil 3.1 und geöffnetem zweiten Auf-Zu-Ventil 3.2 dar. Infolge des geöffneten zweiten Auf-Zu-Ventils 3.2 sind die Drosselöffnungen 18 der ersten Drosselstelle 4.1 überbrückt, so dass das Gas direkt zur zweiten Drosselstelle 4.2 gelangt und auf dem Weg zum Gasausgang 2 die weiteren Drosselstellen 4.3 bis 4.5 durchströmt. Infolge des geöffneten ersten Auf-Zu-Ventils 3.1 ist der Gasweg über die erste Drosselstelle 4.1 offen. Augrund des gleichen Druckniveaus auf beiden Seiten der ersten Drosselstelle 4.1 strömt durch die erste Drosselstelle 4.1 praktisch kein Gas.

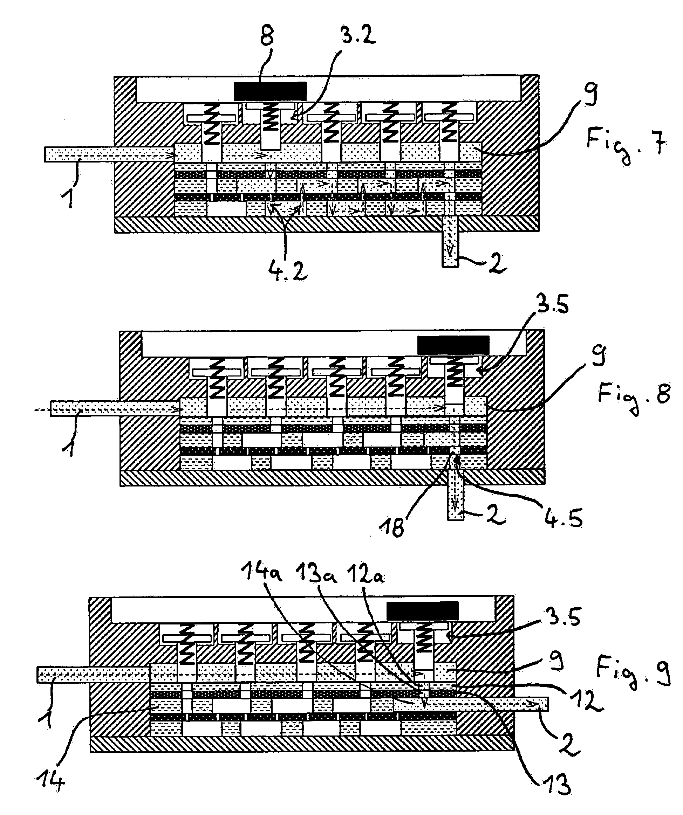

In Figur 7 ist der schematische Aufbau mit geöffnetem zweitem Auf-Zu-Ventil 3.2 dargestellt. Alle übrigen Auf-Zu-Ventile 3.1 und 3.3 bis 3.5 sind geschlossen. Der Gasvolumenstrom durch die Gasventileinheit ist praktisch identisch zu dem Gasvolumenstrom in der Ventilstellung gemäß Figur 6.

Der Permanentmagnet 8 und die Bauteile der Auf-Zu-Ventile 3 sind derart aufeinander abgestimmt, dass bei geöffneter Gasventileinheit entweder genau ein Auf-Zu-Ventil 3 oder genau zwei Auf-Zu-Ventile 3 geöffnet sind. Während des Umschaltens von einem Auf-Zu-Ventil 3 auf ein benachbartes Auf-Zu-Ventil 3 sind kurzzeitig immer beide benachbarte Auf-Zu-Ventile 3 geöffnet. Damit ist sichergestellt, dass ein Umschalten nicht zu einer kurzzeitigen Unterbrechung der Gaszufuhr zu einem Gasbrenner und damit zu einem Flackern oder einem Erlöschen der Gasflammen führt. Mit der oben beschriebenen Schaltung ist ebenfalls sichergestellt, dass während eines Umschaltvorgangs auch keine kurzzeitige Erhöhung des Gasvolumenstroms eintritt. Auch ein Aufflackern der Gasflammen während eines Umschaltvorgangs ist damit sicher verhindert.

Figur 8 zeigt schließlich die schematische Darstellung der Gasventileinheit, wenn ausschließlich das letzte Auf-Zu-Ventil 3.5 geöffnet ist. Das Gas strömt hierbei vom Gaseingang über den Gaseingangsraum, das geöffnete Auf-Zu-Ventil 3.5 und die diesem zugeordnete letzte Drosselöffnung 18 praktisch ungehindert zum Gasausgang.

In Figur 9 ist der schematische Aufbau einer Variante der Gasventileinheit dargestellt. Im Gegensatz zu der Ausführung gemäß Fig. 4 bis 8 zweigt hier der Gasausgang 2 direkt von der ersten Gasverteilungsplatte 14 ab. Bei geöffnetem Auf-Zu-Ventil 3.5 strömt das Gas ungedrosselt über den Gaseingang 1, den Gaseingangsraum 9, das Auf-Zu-Ventil 3.5, die letzte Öffnung 12a in der Ventildichtplatte 12, die letzte Öffnung 13a in der Druckplatte 13 und die letzte Öffnung 14a in der ersten Gasverteilungsplatte 14 zum Gasausgang 2. Die letzte Drosselstelle 4.5 (siehe Fig. 4 bis 8) ist bei der Variante gemäß Figur 9 nicht vorhanden.

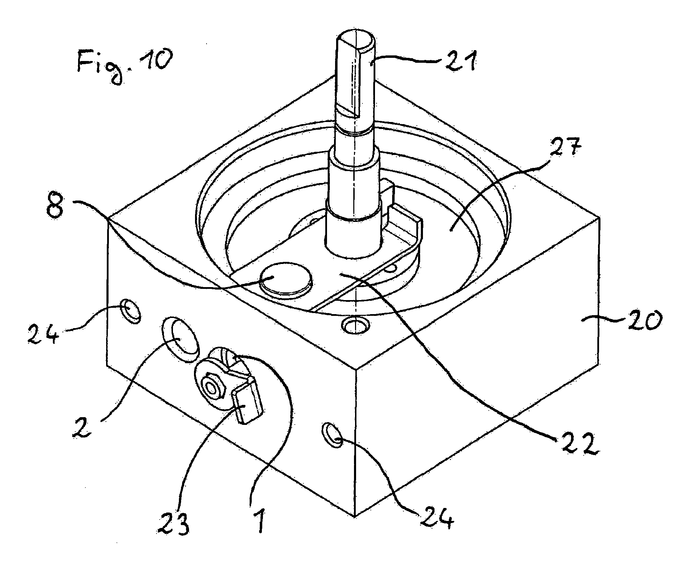

In Figur 10 ist ein Ausführungsbeispiel der Gasventileinheit in perspektivischer Ansicht schräg von oben dargestellt. Zu erkennen ist ein Ventilkörper 20 in dem eine Schaltwelle 21 der Gasventileinheit drehbar gelagert ist. An die Schaltwelle 21 ist ein Mitnehmer 22 gekoppelt, der eine Drehbewegung der Schaltwelle 21 auf einen Permanentmagnet 8 überträgt, der damit bei einer Drehbewegung der Schaltwelle 21 auf einer Kreisbahn geführt wird. Eine Abdeckung 27 bildet eine Gleitfläche für den Permanentmagnet 8 und stellt einen definierten Abstand zwischen dem Permanentmagnet 8 und den Auf-Zu-Ventilen 3 her. Zu erkennen ist weiter der Gasausgang 2 sowie ein in dem Gaseingang 1 angeordneter Betätigungshebel 23 für eine nicht dargestellte Magnetventileinheit. Der Betätigungshebel 23 ist an die Schaltwelle derart gekoppelt, dass bei einem axialen Drücken der Schaltwelle der Betätigungshebel 23 aus dem Ventilkörper 20 ausfährt. Durch Drücken der Schaltwelle 21 kann damit die Magnetventileinheit geöffnet werden. Bohrungen 24 dienen zur Befestigung der Magnetventileinheit an dem Ventilkörper.

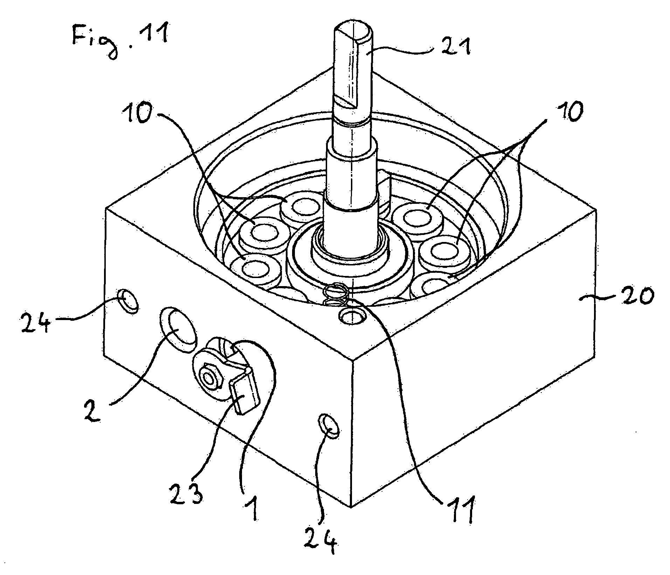

Figur 11 zeigt die Ansicht gemäß Figur 10, unter Weglassung des Mitnehmers 22, des Permanentmagnets 8. Zu erkennen sind in Figur 11 insbesondere die ringförmig angeordneten Absperrkörper 10 der Auf-Zu-Ventile 3. Jedem der Absperrkörper 10 ist eine Feder 11 zugeordnet, die den Absperrkörper 10 nach in der Zeichnung unten drückt. In der Figur 11 ist beispielhaft eine der Federn 11 abgebildet.

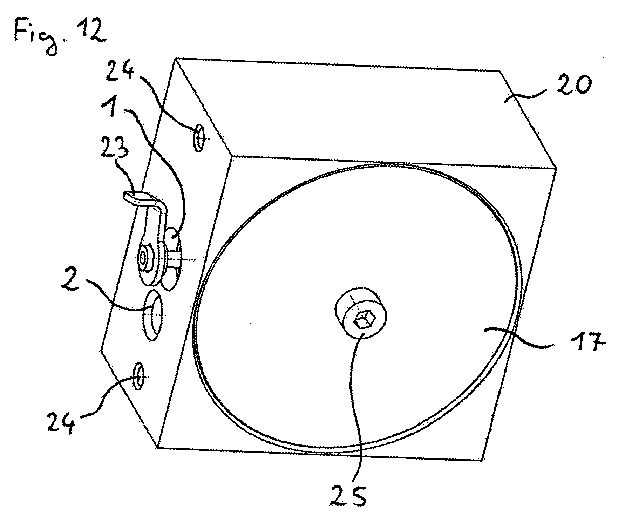

In Figur 12 ist die Gasventileinheit in perspektivischer Ansicht schräg von unten abgebildet. Zu erkennen ist hier insbesondere eine Abschlussplatte 17, welche die in der Figur nicht dargestellten übrigen Platten, die Ventildichtplatte 12, die Druckplatte 13, die erste Gasverteilungsplatte 14, die Drosselplatte 15 und die zweite Gasverteilungsplatte 16 zusammendrückt. Die hierfür erforderliche Kraft wird mittels einer Schraube 25 erzeugt.

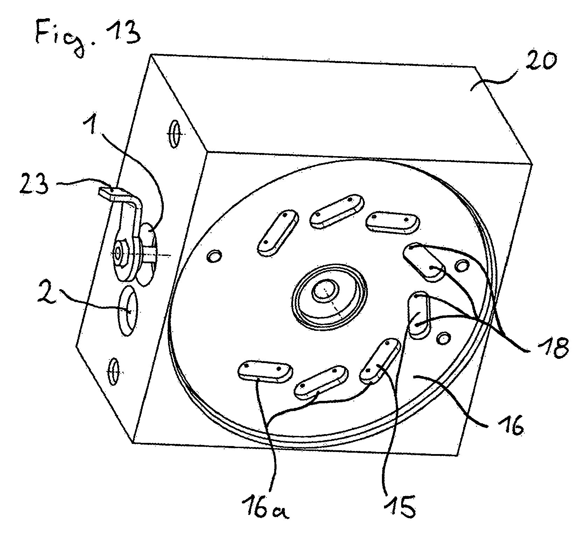

Figur 13 zeigt die Ansicht gemäß Figur 12 mit abgenommener Abschlussplatte 17. Zu erkennen ist hier die zweite Gasverteilungsplatte 16 mit den Öffnungen 16a. Durch diese Öffnungen 16a sind Ausschnitte der Drosselplatte 15 mit den darin befindlichen Drosselöffnungen 18 sichtbar. Zu erkennen ist ebenfalls, dass jeweils zwei Drosselöffnungen 18 über eine Öffnung 16a der zweiten Gasverteilungsplatte 16 verbunden sind.

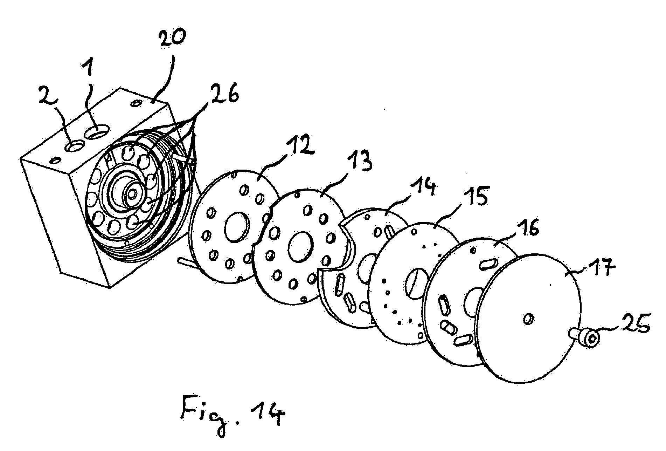

Der schichtweise Aufbau der Gasventileinheit ist anhand Figur 14 mit einer Explosionsdarstellung verdeutlicht. Zu erkennen ist hier der Ventilkörper 20 mit Führungsbohrungen 26 für die in der vorliegenden Ansicht nicht dargestellten Absperrkörper 10 der Auf-Zu-Ventile 3. In den Ventilkörper 20 werden die nachfolgend genannten Platten in folgender Reihenfolge eingesetzt: Ventildichtplatte 12, Druckplatte 13, erste Gasverteilungsplatte 14, Drosselplatte 15, zweite Gasverteilungsplatte 16, Abschlussplatte 17. Die Schraube 25 drückt die sich am Ventilkörper 20 abstützenden Platten 12, 13, 14, 15, 16, 17 aufeinander.

Im vorliegenden Ausführungsbeispiel sind die Platten 12, 13, 14, 15, 16, 17 einzeln in den Ventilkörper 20 eingesetzt. Möglich ist es jedoch auch, die Platten 12, 13, 14, 15, 16, 17 als Paket vorzufertigen, so dass sie nur gemeinsam in den Ventilkörper 20 eingesetzt und wieder entnommen werden können. Zum Umrüsten der Gasventileinheit auf eine andere Gasart muss dann, je nach Bauweise, entweder nur die Drosselplatte 15, oder das gesamte Paket der Platten 12, 13, 14, 15, 16, 17 ausgetauscht werden.

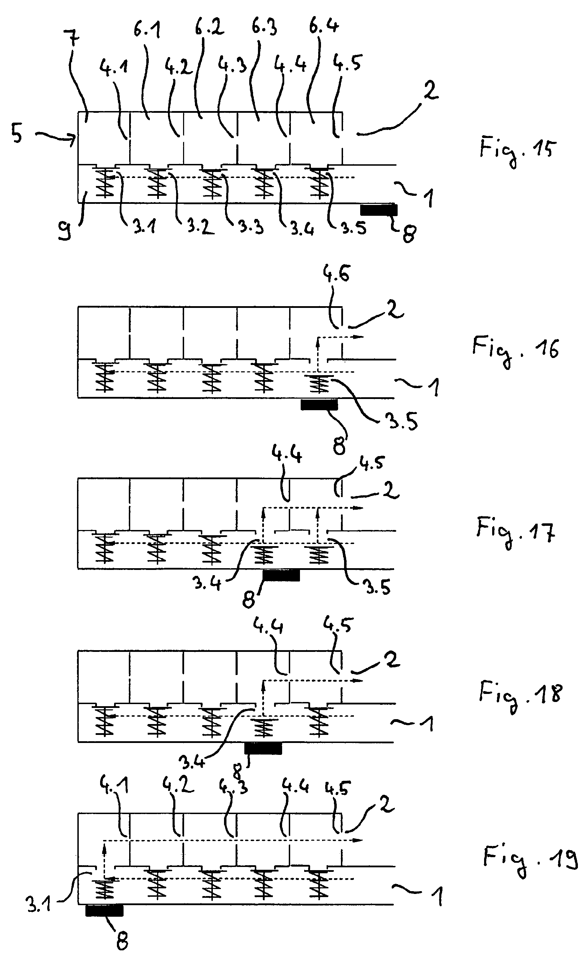

Figur 15 zeigt eine Variante der Schaltanordnung gemäß Figur 1 bis 3. Die Anordnung der Drosselstrecke 5 mit den Drosselstellen 4 (4.1 bis 4.5) entspricht exakt der Anordnung gemäß Figur 1 bis 3. Auch die Anordnung des Gaseingangsraums 9, sowie der Auf-Zu-Ventile 3 (3.1 bis 3.5) entspricht dem Ausführungsbeispiel gemäß Figur 1 bis 3. Im Gegensatz zu dem Ausführungsbeispiel gemäß Figur 1 bis 3 befindet sich der Gaseingang 1 auf der in der Zeichnung rechten Seite des Gaseingangsraums 9. Der Ort des Gaseingangs 1 bezüglich des Gaseingangsraums 9 und damit auch die Strömungsrichtung des Gases innerhalb des Gaseingangsraums 9 sind jedoch für die Funktion der Gasventileinheit weitgehend unerheblich. Innerhalb der Drosselstrecke 5 strömt das Gas, analog zur Anordnung gemäß Figur 1 bis 3, in Richtung von links nach rechts. Folglich wird die in der Zeichnung linke Drosselstelle 4.1 als erste Drosselstelle bezeichnet. Die in der Zeichnung rechte Drosselstelle 4.5 wird als letzte Drosselstelle bezeichnet. Dieser Nomenklatur folgend wird im Folgenden - wie auch in dem Ausführungsbeispiel gemäß Figur 1 bis 3 - das in der Zeichnung linke Auf-Zu-Ventil 3.1 als erstes Auf-Zu-Ventil bezeichnet und das in der Zeichnung rechte Auf-Zu-Ventil 3.5 als letztes Auf-Zu-Ventil.

In der in Figur 15 dargestellten Schaltposition befindet sich der Permanentmagnet 8 rechts von dem letzten Auf-Zu-Ventil 3.5. Der Permanentmagnet 8 übt damit auf keines der Auf-Zu-Ventile 3 eine magnetische Kraft aus, so dass folglich keines der Auf-Zu-Ventile 3.1 bis 3.5 geöffnet ist. Damit ist die Gasventileinheit vollständig geschlossen und die Verbindung zwischen Gaseingang 1 und Gasausgang 2 ist vollständig blockiert.

Um ausgehend von dieser Schaltposition die Gasventileinheit zu öffnen, wird der Permanentmagnet 8 nach links in den Bereich des letzten Auf-Zu-Ventils 3.5 verschoben.

Diese Schaltposition, in der die Gasventileinheit maximal geöffnet ist, ist in Figur 16 dargestellt. Das Gas strömt dabei von dem Gaseingang 1 über das geöffnete letzte Auf-Zu-Ventil 3.5 und die letzte Drosselstelle 4.5 direkt zum Gasausgang 2. Die letzte Drosselstelle 4.5 kann einen derart großen Öffnungsquerschnitt aufweisen, dass praktisch keine Drosselung des Gasstroms erfolgt. In diesem Fall strömt das Gas praktisch ungehindert durch die Gasventileinheit.

Durch Bewegen des Permanentmagnets 8 nach in der Zeichnung links kann der Gasstrom durch die Gasventileinheit nun stufenweise gedrosselt werden. Figur 17 zeigt eine Zwischenstellung des Permanentmagnets 8, in der dieser beide Auf-Zu-Ventile 3.4 und 3.5 öffnet. Der Gasvolumenstrom zum Gasausgang 2 ist hierbei jedoch praktisch identisch zu dem Gasvolumenstrom in der Schaltstellung gemäß Figur 16.

In der Schaltstellung gemäß Figur 18 öffnet der Permanentmagnet ausschließlich das Auf-Zu-Ventil 3.4. Auf dem Weg zum Gasausgang 2 führt der Gasstrom sowohl durch die Drosselstelle 4.4 als auch durch die Drosselstelle 4.5. Der Öffnungsquerschnitt der Drosselstelle 4.4 ist kleiner als der Öffnungsquerschnitt der Drosselstelle 4.5, so dass der Gasstrom etwas gedrosselt wird.

Figur 19 zeigt die Gasventileinheit in minimaler Öffnungsstellung, bei der ausschließlich das Auf-Zu-Ventil 3.1 geöffnet ist. Auf dem Weg zum Gasausgang 2 strömt das Gas durch alle Drosselstellen 4.1 bis 4.5. Die Drosselstellen 4 besitzen, in Gasströmungsrichtung in der Drosselstrecke 5 betrachtet, einen zunehmenden Querschnitt. Somit ist der sich einstellende Gasvolumenstrom maßgeblich durch die Drosselstelle 4.1 bestimmt, die den kleinsten Öffnungsquerschnitt besitzt. Der den Gasvolumenstrom ebenfalls beeinflussende Strömungswiderstand durch die übrigen Drosselstellen 4.2 bis 4.5 ist bei der Auslegung der Öffnungsquerschnitte berücksichtigt.

Bei der Schaltanordnung gemäß Figur 15 bis 19 befindet sich die Gasventileinheit sofort in maximal geöffneter Position, wenn sie ausgehend von ihrer Schließstellung betätigt wird. Dies hat den positiven Effekt, dass sich die der Gasventileinheit nachgeschalteten gasführenden Leitungen und Gasbrenner besonders schnell mit Gas füllen. Darüber hinaus kann ein Zünden des Gasbrenners sofort nach dem Öffnen der Gasventileinheit bei maximalem Gasvolumenstrom erfolgen, wodurch der Zündvorgang erleichtert wird.

### Bezugszeichenliste

- 1: Gaseingang
- 2: Gasausgang
- 3 (3.1 bis 3.5): Auf-Zu-Ventile
- 4 (4.1 bis 4.5): Drosselstellen
- 5: Drosselstrecke
- 6 (6.1 bis 6.4): Verbindungsabschnitt
- 7: Eingangsabschnitt
- 8: Permanentmagnet
- 9: Gaseingangsraum
- 10: Absperrkörper
- 11: Feder
- 12: Ventildichtplatte
- 12a: Öffnungen
- 13: Druckplatte
- 13a: Öffnungen
- 14: erste Gasverteilungsplatte
- 14a: Öffnungen
- 15: Drosselplatte
- 16: zweite Gasverteilungsplatte
- 16a: Öffnungen
- 17: Abschlussplatte
- 18: Drosselöffnungen
- 20: Ventilkörper
- 21: Schaltwelle
- 22: Mitnehmer
- 23: Betätigungshebel
- 24: Bohrungen
- 25: Schraube
- 26: Führungsbohrungen
- 27: Abdeckung

## Patentansprüche

1. Gasventileinheit zum Einstellen eines einem Gasbrenner eines Gasgeräts, insbesondere eines Gaskochgeräts, zugeführten Gasvolumenstroms, wobei die Gasventileinheit mindestens zwei Auf-Zu-Ventile (3) aufweist, wobei die Auf-Zu-Ventile (3) durch Bewegen mindestens eines magnetisch wirksamen Körpers, insbesondere eines Permanentmagnets (8), relativ zu den Auf-Zu-Ventilen (3) betätigbar sind, wobei jedes Auf-Zu-Ventil (3) einen bewegbaren Absperrkörper (10) aufweist, der bei geschlossenem Auf-Zu-Ventil (3) an einem Ventilsitz anliegt und dadurch eine Öffnung (12a) im Ventilsitz verschließt, **dadurch gekennzeichnet, dass** die Absperrkörper (10) der einzelnen Auf-Zu-Ventile (3) auf einer Kreisbahn um eine Achse der Gasventileinheit angeordnet sind und die Absperrkörper (10) parallel zu dieser Achse bewegbar sind, wobei der mindestens eine vorzugsweise als Permanentmagnet (8) ausgeführte magnetisch wirksame Körper an einem um die Achse der Gasventileinheit drehbaren Bauteil der Gasventileinheit angeordnet ist.

2. Gasventileinheit nach Anspruch 1, **dadurch gekennzeichnet, dass** der Ventilsitz als im Wesentlichen ebene Fläche ausgeführt ist.

3. Gasventileinheit nach Anspruch 1 oder 2, **dadurch gekennzeichnet, dass** die Ventilsitze der mindestens zwei Auf-Zu-Ventile (3) von einem gemeinsamen Bauteil gebildet sind, welches vorzugsweise von einer Ventildichtplatte (12) gebildet ist.

4. Gasventileinheit nach einem der Ansprüche 1 bis 3, **dadurch gekennzeichnet, dass** jedes Auf-Zu-Ventil (3) eine Feder (11) aufweist, die bei geschlossenem Auf-Zu-Ventil (3) den Absperrkörper (10) auf den Ventilsitz drückt.

5. Gasventileinheit nach einem der Ansprüche 1 bis 4, **dadurch gekennzeichnet, dass** zum Öffnen des Auf-Zu-Ventils (3) der Absperrkörper (10) mittels der Kraft des Permanentmagnets (8) entgegen der Kraft der Feder (11) von dem Ventilsitz abhebbar ist.

6. Gasventileinheit nach einem der Ansprüche 1 bis 5, **dadurch gekennzeichnet, dass** jeder Absperrkörper (10) von einem im Wesentlichen zylindrischen Stößel gebildet ist.

7. Gasventileinheit nach einem der Ansprüche 1 bis 6, **dadurch gekennzeichnet, dass** jeder Absperrkörper (10) in einem Ventilkörper (20) der Gasventileinheit axial bewegbar geführt ist.

8. Gasventileinheit nach einem der Ansprüche 1 bis 7, **dadurch gekennzeichnet, dass** die Gasventileinheit mehrere, vorzugsweise mindestens vier Auf-Zu-Ventile (3) aufweist.

9. Gasventileinheit nach einem der Ansprüche 2 bis 8, **dadurch gekennzeichnet, dass** die Achse von einer Schaltwelle (21) der Gasventileinheit gebildet ist.

10. Gasventileinheit nach einem der Ansprüche 1 bis 9, **dadurch gekennzeichnet, dass** zur Betätigung des Auf-Zu-Ventils (3) die Position des vorzugsweise als Permanentmagnet (8) ausgeführten magnetisch wirksamen Körpers relativ zu dem Absperrkörper (10) des Auf-Zu-Ventils (3) veränderbar ist.

11. Gasventileinheit nach einem der Ansprüche 1 bis 10, **dadurch gekennzeichnet, dass** der mindestens eine vorzugsweise als Permanentmagnet (8) ausgeführte magnetisch wirksame Körper und die Auf-Zu-Ventile (3) derart ausgeführt sind, dass - in Abhängigkeit von der Position des magnetisch wirksamen Körpers - entweder kein Auf-Zu-Ventil (3) oder genau ein Auf-Zu-Ventil (3) oder genau zwei nebeneinander angeordnete Auf-Zu-Ventile (3) geöffnet sind.

12. Gasventileinheit nach einem der Ansprüche 1 bis 11, **dadurch gekennzeichnet, dass** die Achse von einer Schaltwelle (21) der Gasventileinheit gebildet ist und wobei das drehbare Bauteil von einem Mitnehmer (22) gebildet ist.

13. Gasventileinheit nach Anspruch 12, **dadurch gekennzeichnet, dass** das drehbare Bauteil durch eine Bedienperson von Hand um die Achse drehbar ist.

14. Gasventileinheit nach Anspruch 12 oder 13, **dadurch gekennzeichnet, dass** das drehbare Bauteil mittels eines elektrischen Stellglieds um die Achse drehbar ist.

## Claims

1. Gas valve unit for adjusting a volumetric gas flow supplied to a gas burner of a gas appliance, in particular a gas cooking appliance, the gas valve unit having at least two open/close valves (3), wherein the open/close valves (3) can be actuated by moving at least one magnetically active body, in particular a permanent magnet (8), relative to the open/close valves (3), wherein each open/close valve (3) has a movable shut-off body (10) which bears against a valve seat when the open/close valve (3) is closed and thereby seals an orifice (12a) in the valve seat, **characterised in that** the shut-off bodies (10) of the individual open/close valves (3) are arranged on a circular path around an axis of the gas valve unit and the shut-off bodies (10) can be moved parallel to said axis, wherein the at least one magnetically active body that is preferably implemented in the form of a permanent magnet (8) is arranged on a component of the gas valve unit that is rotatable about the axis of the gas valve unit.

2. Gas valve unit according to claim 1, **characterised in that** the valve seat is implemented as a substantially flat surface.

3. Gas valve unit according to claim 1 or 2, **characterised in that** the valve seats of the at least two open/close valves (3) are formed by a common component which is preferably formed by a valve sealing plate (12).

4. Gas valve unit according to one of claims 1 to 3, **characterised in that** each open/close valve (3) has a spring (11) which presses the shut-off body (10) onto the valve seat when the open/close valve (3) is closed.

5. Gas valve unit according to one of claims 1 to 4, **characterised in that** in order to open the open/close valve (3) the shut-off body (10) can be lifted off from the valve seat against the force of the spring (11) by means of the force of the permanent magnet (8).

6. Gas valve unit according to one of claims 1 to 5, **characterised in that** each shut-off body (10) is formed by a substantially cylindrical plunger.

7. Gas valve unit according to one of claims 1 to 6, **characterised in that** each shut-off body (10) is guided in a valve body (20) of the gas valve unit so as to be movable in the axial direction.

8. Gas valve unit according to one of claims 1 to 7, **characterised in that** the gas valve unit has a plurality of, preferably at least four, open/close valves (3).

9. Gas valve unit according to one of claims 2 to 8, **characterised in that** the axis is preferably formed by a switching shaft (21) of the gas valve unit.

10. Gas valve unit according to one of claims 1 to 9, **characterised in that** in order to actuate the open/close valve (3) the position of the magnetically active body that is preferably implemented in the form of a permanent magnet (8) can be varied relative to the shut-off body (10) of the open/close valve (3).

11. Gas valve unit according to one of claims 1 to 10, **characterised in that** the at least one magnetically active body that is preferably implemented in the form of a permanent magnet (8) and the open/close valves (3) are embodied in such a way that - dependent on the position of the magnetically active body - either no open/close valve (3) or precisely one open/close valve (3) is open or precisely two open/close valves (3) arranged next to each other are open.

12. Gas valve unit according to one of claims 1 to 11, **characterised in that** the axis is formed by a switching shaft (21) of the gas valve unit and wherein the rotatable component is formed by a driver (22).

13. Gas valve unit according to claim 12, **characterised in that** the rotatable component can be rotated about the axis by hand by an operator.

14. Gas valve unit according to claim 12 or 13, **characterised in that** the rotatable component can be rotated about the axis by means of an electrical actuating element.

## Revendications

1. Unité de soupapes à gaz pour le réglage d'un débit volumique de gaz amené à un brûleur à gaz d'un appareil à gaz, en particulier d'un appareil de cuisson à gaz, l'unité de soupapes à gaz comprenant au moins deux soupapes marche-arrêt (3), les soupapes marche-arrêt (3) étant actionnables par déplacement d'au moins un élément à action magnétique, en particulier d'un aimant permanent (8), par rapport aux soupapes marche-arrêt (3), chaque soupape marche-arrêt (3) comprenant un élément obturateur mobile (10) qui pour une soupape marche-arrêt (3) fermée repose sur un siège de soupape et ainsi ferme un passage (12a) dans le siège de soupape, **caractérisée en ce que** les éléments obturateurs (10) de chacune des soupapes marche-arrêt (3) sont disposés sur une voie circulaire autour d'un axe de l'unité de soupapes à gaz, et les éléments obturateurs (10) peuvent se déplacer parallèlement à cet axe, l'au moins un élément à action magnétique se présentant de préférence sous la forme d'un aimant permanent (8) étant disposé sur un composant de l'unité de soupapes à gaz pouvant tourner autour de l'axe de l'unité de soupapes à gaz.

2. Unité de soupapes à gaz selon la revendication 1, **caractérisée en ce que** le siège de soupape se présente sous la forme d'une surface essentiellement plane.

3. Unité de soupapes à gaz selon la revendication 1 ou 2, **caractérisée en ce que** les sièges de soupape des au moins deux soupapes marche-arrêt (3) sont formés d'un composant commun, qui de préférence est formé d'une plaque d'étanchéité de soupape (12).

4. Unité de soupapes à gaz selon l'une des revendications 1 à 3, **caractérisée en ce que** chaque soupape marche-arrêt (3) comprend un ressort (11) qui pour une soupape marche-arrêt (3) fermée presse l'élément obturateur (10) sur le siège de soupape.

5. Unité de soupapes à gaz selon l'une des revendications 1 à 4, **caractérisée en ce que** pour l'ouverture de la soupape marche-arrêt (3), l'élément obturateur (10) peut se soulever du siège de soupape sous l'effet de la force de l'aimant permanent (8) à l'encontre de la force du ressort (11).

6. Unité de soupapes à gaz selon l'une des revendications 1 à 5, **caractérisée en ce que** chaque élément obturateur (10) est formé d'un poussoir essentiellement cylindrique.

7. Unité de soupapes à gaz selon l'une des revendications 1 à 6, **caractérisée en ce que** chaque élément obturateur (10) est guidé de façon mobile axialement dans un élément de soupape (20) de l'unité de soupapes à gaz.

8. Unité de soupapes à gaz selon l'une des revendications 1 à 7, **caractérisée en ce que** l'unité de soupapes à gaz comprend plusieurs, de préférence au moins quatre, soupapes marche-arrêt (3).

9. Unité de soupapes à gaz selon l'une des revendications 2 à 8, **caractérisée en ce que** l'axe est formé d'un arbre de commande (21) de l'unité de soupapes à gaz.

10. Unité de soupapes à gaz selon l'une des revendications 1 à 9, **caractérisée en ce que**, pour l'actionnement de la soupape marche-arrêt (3), la position de l'élément à action magnétique se présentant de préférence sous la forme d'un aimant permanent (8) peut être modifiée par rapport à l'élément obturateur (10) de la soupape marche-arrêt (3).

11. Unité de soupapes à gaz selon l'une des revendications 1 à 10, **caractérisée en ce que** l'au moins un élément à action magnétique se présentant de préférence sous la forme d'un aimant permanent (8) et la soupape marche-arrêt (3) sont conçus de telle sorte que - en fonction de la position de l'élément à action magnétique - soit aucune soupape marche-arrêt (3), soit juste une soupape marche-arrêt (3), soit juste deux soupapes marche-arrêt (3) disposées l'une au voisinage de l'autre soient ouvertes.

12. Unité de soupapes à gaz selon l'une des revendications 1 à 11, **caractérisée en ce que** l'axe est formé d'un arbre de commande (21) de l'unité de soupapes à gaz et le composant rotatif est formé d'un entraîneur (22).

13. Unité de soupapes à gaz selon la revendication 12, **caractérisée en ce que** le composant rotatif peut être tourné à la main autour de l'axe par un opérateur.

14. Unité de soupapes à gaz selon la revendication 12 ou 13, **caractérisée en ce que** le composant rotatif peut être tourné autour de l'axe au moyen d'un organe de réglage électrique.
